# EUROPÄISCHE PATENTSCHRIFT

(11) **EP 1 209 042 B1**
(45) Veröffentlichungstag und Bekanntmachung des Hinweises auf die Patenterteilung: **11.01.2006**
(21) Anmeldenummer: 01127411.5
(22) Anmeldetag: 23.11.2001
(51) Int. Cl.: B60R 21/16, B60R 21/20

(54) **Halteklammer**
Retaining clip
Agrafe de retenue

(30) Priorität: 27.11.2000 DE 20020097 U
(43) Veröffentlichungstag der Anmeldung: 29.05.2002
(73) Patentinhaber: TRW Automotive GmbH, 73553 Alfdorf (DE)
(72) Erfinder: Fischer, Anton, 73579 Leinweiler (DE)
(74) Vertreter: Sties, Jochen

(56) Entgegenhaltungen:
- WO-A-99/19174
- DE-A- 19 752 989
- DE-U- 29 909 326

## Beschreibung

Die Erfindung betrifft eine Halteklammer für einen gefalteten Gassack eines Fahrzeuginsassen-Rückhaltesystems gemäß Anspruch 1.

Die DE 197 52 989 A1 zeigt als nächstkommender Stand der Technik u.a. Halteelemente, die an einem Vorderpfostenabschnitt und an einem Dachlängsträgerabschnitt befestigt sind und einen Airbag in einer gefalteten Stellung halten. Die Halteelemente verfügen jeweils über einen Öffnungsabschnitt mit einer Abdeckung, wobei die Abdeckung mit einem Haken, der in ein Loch eingreift geöffnet und geschlossen werden kann. Der Entfaltungsdruck des Airbags reicht aus, um die Abdeckung aufzudrücken, so daß sich der Airbag entfalten kann.

In der US 5,791,683 ist eine Seitenfenstergassack-Schutzeinrichtung offenbart, bei welcher der gefaltete Gassack entlang des Dachrahmens von vier Halteklammern gehalten wird, die das gefaltete Gassackpaket umschließen. Bei Auslösung der Schutzeinrichtung muß der Druck des einströmenden Gases die Halteklammer an einer dafür vorbestimmten Sollbruchstelle aufreißen, damit sich der Gassack entfalten kann.

Die Sollbruchstelle muß einerseits stabil und dauerhaft genug sein, um den Gassack über die Lebensdauer des Fahrzeuges sicher halten zu können, andererseits muß die zum Aufreißen der Sollbruchstelle erforderliche Energie möglichst gering sein, damit zur Platz- und Gewichtseinsparung ein möglichst kleiner Gasgenerator verwendet werden kann. Weiterhin besteht die Gefahr, daß beim Aufreißen der Sollbruchstelle scharfe Kanten entstehen, die das Gewebe des Gassackes verletzen können.

Der Erfindung liegt daher die Aufgabe zugrunde, eine einfache Halteklammer für einen gefalteten Gassack zu schaffen, die den Gassack zuverlässig hält, aber bei der Entfaltung leicht geöffnet werden kann.

Zu diesem Zweck ist eine Halteklammer mit den Merkmalen des Anspruchs 1 vorgesehen. Bei dieser Gestaltung kann der sich entfaltende Gassack die Halteklammer einfach durch Verbiegen öffnen, ohne daß das Material der Klammer durchbrochen werden muß. Damit werden auch scharfe Bruchkanten vermieden, denn die aneinander angrenzenden Enden von Basisteil und Halteteil können abgerundet und geglättet sein.

Weitere Ausgestaltungen der Erfindung und deren Vorteile ergeben sich aus den Unteransprüchen.

Die Erfindung wird nachfolgend anhand einer bevorzugten Ausführungsform ausführlich beschrieben. Dabei wird Bezug genommen auf die beigefügten Zeichnungen, in welchen zeigt:
- Figur 1 eine Ansicht eines Fahrzeuginsassen-Rückhaltesystems mit erfindungsgemäßen Halteklammern;
- Figur 2 einen Querschnitt durch das Fahrzeuginsassen-Rückhaltesystem aus Figur 1 entlang der Linie II in Figur 1.

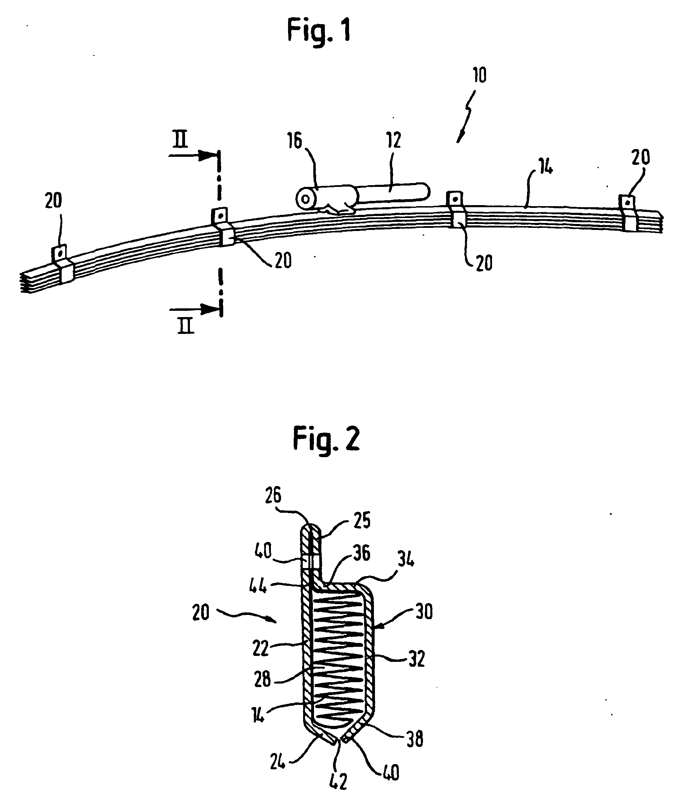

In Figur 1 ist ein Fahtzeuginsassen-Rückhaltesystem 10 dargestellt, welches beispielsweise zur Montage am Dachrahmen eines Fahrzeuges vorgesehen sein kann. Das System 10 enthält einen Gasgenerator 12 und einen langgestreckten, zusammengefalteten Gassack 14. In der Mitte des Gassackes 14 ist in bekannter Weise ein Einblasgehäuse 16 ausgebildet, in das ein Ende eines Gasgenerators 12 hineinragt, an dem sich Ausströmöffnungen für das zu erzeugende Gas befinden. Die Funktionsweise von Gasgenerator 12 und Gassack 14 ist an sich wohlbekannt und wird daher nicht weiter erläutert.

Der gefaltete Gassack 14 wird durch vier Halteklammern 20 zusammengehalten, von denen eine im Querschnitt in Figur 2 genauer zu sehen ist. Die Halteklammer 20 besteht aus einem Streifen, vorzugsweise aus Blech, mit einem geraden Basisteil 22 mit einem abgewinkelten freien Ende 24. An einem dem freien Ende 24 gegenüberliegenden Ende des Basisteiles ist der Blechstreifen um eine Biegekante 26 gefaltet, so daß der doppellagige Blechstreifen eine Befestigungslasche 25 bildet, die sich von der Biegekante 26 einwärts bis zu einem Verbindungsabschnitt erstreckt, an dem der Blechstreifen durch eine Biegung von etwa 90° in ein Haltteil 30 übergeht. Das Halteteil 30 wird von einem etwa U-förmig gebogenen Abschnitt des Blechstreifens gebildet, dessen Öffnung 28 zum Basisteil 22 weist, wobei in der Öffnung 28 der gefaltete Gassack 14 aufgenommen ist. Das Halteteil besteht aus einem Boden 32, einem ersten Schenkel 34, der sich senkrecht zum Boden 32 erstreckt und ein erstes Ende 36 aufweist, das mit dem Verbindungsabschnitt des Basisteils 22 verbunden ist, und einem zweiten Schenkel 38 mit einem zweiten Ende 40. Der zweite Schenkel 38 ist unter etwa 45° gegenüber dem Boden 32 zum Basisteil 22 hin abgewinkelt und grenzt an das freie Ende 24 des Basisteils 22, das ebenfalls etwa 45° zum Halteteil 30 hin abgewinkelt ist. Das zweite Ende 40 und das freie Ende 24 sind nicht miteinander verbunden, so daß zwischen ihnen ein Spalt 42 bestehen kann.

Im Bereich der Befestigungslasche 25 befindet sich eine Bohrung 40, mittels derer die Halteklammer 20 am Fahrzeug durch Schrauben oder Niete befestigt werden kann, so daß der Luftsack 14 auf seiner vorgesehenen Position im Fahrzeug fixiert ist.

Wenn der Gassack 14 aufgeblasen wird, soll er sich in Richtung des Spaltes 42 entfalten, in den Figuren nach unten. Dabei öffnet der Gassack 14 die Halteklammer 20 durch plastische oder elastische Verformung des Basisteils 22 im Bereich des freien Endes 24 und des zweiten Schenkels 38 bzw. des gesamten Halteteils 30. Damit ist die Haltekraft der Halteklammer 20 durch ihre Dimensionen und die Materialeigenschaften ihres Werkstoffes bestimmt.

Die Halteklammern 20 werden vorzugsweise erst beim Zusammenbau des Fahrzeuginsassen-Rückhaltesystems 10 an der Biegekante 26 zusammengefaltet, wobei in vorteilhafter Weise am Gassack vorgesehene Fixierlaschen 44 in die Befestigungslasche 25 eingeklemmt werden. In diesen Fixierlaschen 44 können Öffnungen vorgesehen sein, die beim Zusammenbau in Flucht mit den Bohrungen 40 gebracht werden können, so daß der Gassack genau an einer vorgesehenen Position im Fahrzeug montiert werden kann.

Durch die Verwendung eines weichen Werkstoffes, beispielsweise Blech, als Werkstoff für die Halteklammer 20 ist in vorteilhalfter Weise die sichere Funktion im gesamten Temperaturbereich gewährleistet, da ein weicher Werkstoff bei tiefen Temperaturen eine bessere Bruchfestigkeit aufweist.

Selbstverständlich sind zahlreiche Varianten in der Gestaltung der Halteklammer 20 möglich, ohne die Funktionsweise grundsätzlich zu verändern. So könnte der abgewinkelte Abschnitt des Basisteils 22 im Bereich des freien Endes 24 weggelassen werden, wenn sich stattdessen der zweite Schenkel 38 bis zum Basisteil 22 erstreckt.

## Patentansprüche

1. Halteklammer (20) für einen gefalteten Gassack eines Fahrzeuginsassen-Rückhaltesystems, bestehend aus einem Streifen mit einem Basisteil (22) und einem Halteteil (30), wobei zwischen dem Basisteil und dem Halteteil eine Öffnung (28) gebildet ist, in der ein gefalteter Gassack (14) aufgenommen werden kann, wobei das Basisteil ein freies Ende (24) aufweist, an einem gegenüberliegenden Ende um eine Biegekante (26) gefaltet ist, so daß der doppellagige Streifen eine Befestigungslasche (25) bildet, in die am Gassack vorgesehene Fixierlaschen (44) eingeklemmt werden können, und einen Verbindungsabschnitt, der mit einem ersten Ende (36) des Halteteils (30) verbunden ist, wobei ein zweites Ende (40) des Halteteils an das freie Ende (24) des Basisteils (22) angrenzt.

2. Halteklammer nach Anspruch 1, **dadurch gekennzeichnet, daß** sie aus Blech besteht.

## Claims

1. A holding bracket (20) for a folded airbag of a vehicle occupant restraint system, consisting of a strip having a base part (22) and a holding part (30), an opening (28) being defined between the base part and the holding part, the opening (28) being adapted to accommodate a folded airbag (14), the base part having a free end (24) and being folded around a bending edge (26) at an opposite end, so that the double-layered strip constitutes a fastening tab (25) into which locating tabs (44) can be clamped which are provided on the airbag, and a connecting section that is connected to a first end (36) of the holding part (30), a second end (40) of the holding part being adjacent to the free end (24) of the base part (22).

2. The holding bracket according to Claim 1, **characterized in that** it is made of sheet metal.

## Revendications

1. Agrafe de retenue (20) pour un coussin à gaz plié d'un système de retenue de passager de véhicule, constituée par une bande avec une partie de base (22) et une partie de retenue (30), une ouverture (28), dans laquelle un coussin à gaz (14) plié peut être reçu, étant formée entre la partie de base et la partie de retenue, la partie de base présentant une extrémité libre (24), étant pliée à l'extrémité opposée autour d'une arête de flexion (26) de telle sorte que la bande à double couche forme une patte de fixation (25) dans laquelle des pattes d'ajustage (44) prévues sur le coussin à gaz peuvent être serrées, et un tronçon de liaison qui est relié à une première extrémité (36) de la partie de retenue (30), une deuxième extrémité (40) de la partie de retenue étant adjacente à l'extrémité libre (24) de la partie de base (22).

2. Agrafe de retenue selon la revendication 1, **caractérisé en ce qu'**elle est en tôle.
